# EUROPÄISCHE PATENTSCHRIFT

(11) **EP 1 916 171 B1**
(45) Veröffentlichungstag und Bekanntmachung des Hinweises auf die Patenterteilung: **25.07.2012**
(21) Anmeldenummer: 07020266.8
(22) Anmeldetag: 17.10.2007
(51) Int. Cl.: B61D 33/00, B61D 41/04, B61D 49/00, G09F 9/33, G08B 5/22

(54) **Sitz- oder Liegeplatz mit Reservierungsanzeige**
Seat or berth with reservation display
Siège ou lit doté d'un affichage de réservation

(30) Priorität: 24.10.2006 DE 202006016381 U
(43) Veröffentlichungstag der Anmeldung: 30.04.2008
(73) Patentinhaber: Annax Anzeigensysteme GmbH, 63834 Sulzbach/Main (DE)
(72) Erfinder: Elbert, Wolfgang, 63834 Sulzbach (DE)
(74) Vertreter: Pöhner, Wilfried Anton

(56) Entgegenhaltungen:
- DE-U1- 29 716 850
- US-A- 6 140 921
- US-A1- 2003 090 598
- US-A1- 2006 076 906

## Beschreibung

Die Erfindung bezieht sich auf einen Sitz- oder Liegeplatz mit Reservierungsanzeige, bestehend aus einem Sitz und/oder einer Liege mit dazu nahegelegenen Abgrenzungselementen und einer Reservierungsanzeige mit einer Leuchtmatrix aus elektrisch ansteuerbaren Leuchtelementen als Anzeigefläche, die über eine elektronische Schnittstelle nach der Norm EIA-485, ehemals RS 485, ansteuerbar sind und jedes Leuchtelement als "organische, lichtemittierende Diode", auch mit der Abkürzung "OLED" bezeichnet, aufgebaut ist und mit seinem ersten Anschluss mit den ersten Anschlüssen der anderen Leuchtelemente in der jeweiligen Zeile der Leuchtmatrix elektrisch leitend verbunden ist und mit seinem zweiten Anschluss mit den zweiten Anschlüssen der anderen Leuchtelemente in der jeweiligen Spalte der Leuchtmatrix elektrisch leitend verbunden ist und jedes Leuchtelement durch Anlegen einer Spannung an den Anschluss der jeweiligen Spalte und der jeweiligen Zeile der Leuchtmatrix aktivierbar ist.

Für alle Sitze und/oder Liegen, die in größerer Anzahl in Innenräumen wie Versammlungsräumen, Konzertsälen, Restaurants und Solarien, in Verkehrsmitteln wie Zügen, Bussen, Flugzeugen oder Fährschiffen oder auf Außenflächen wie Badestränden oder Sonnenplätzen vorhanden sind, werden bei größerem Andrang von Benutzern Reservierungen der einzelnen Sitze oder Liegen vorgenommen, um entweder eine exakte Zuordnung einer Person zu einem bestimmten Platz zu sichern oder auch um eine möglichst schnelle Besetzung der einzelnen Sitze oder Liegen, wie z. B. beim Stop eines Verkehrsmittels an einem Haltepunkt, sicher zu stellen.

Bei einer Sitzplatzreservierung für die Sitze in Verkehrsmitteln mit länglichen Grundrissen, wie z. B. Eisenbahnen oder Flugzeugen ist es eine sinnvolle Konfiguration, die Passagiere bereits vor dem Einsteigen exakt oder wenigstens annähernd in der Reihenfolge der späteren Klassierung zu ordnen. Dann kann das Besteigen der Verkehrsmittel in dieser Reihenfolge stattfinden, sodass unkoordinierte Bewegungen der Passagiere während der Suche des Sitzplatzes minimiert werden. Auch für diese Wartezonen sind Reservierungsanzeigen sinnvoll, die mit den Reservierungsanzeigen im Verkehrsmittel korrespondieren.

Dieser Aufwand ist jedoch nur dann gerechtfertigt, wenn der Passagier bereits aus der Entfernung über einige Sitzreihen hinweg erkennen kann, welcher Sitzplatz eigentlich für ihn bestimmt ist.

Für diese Aufgabenstellung sind bisher Halterungen eingesetzt worden, in die Schrifttafeln manuell eingeschoben wurden, welche zuvor mit den Reservierungsdaten des jeweiligen Sitzplatzes beschrieben worden sind.

Um den Aufwand der manuellen Verteilung zu minimieren und um die Fehler bei der Bestückung der Halterung zu reduzieren, ist es Stand der Technik, dass als Sitzplatzreservierung eine Anzeige in der Nähe des Sitzes angebracht wird, die über eine elektrische Verbindung zentral angesteuert wird. Als Anzeigeelement werden Punktmatrizen aus mechanisch klappbaren Elementen, selbstleuchtenden oder lichtreflektierenden Leuchtelementen eingesetzt.

Ein wesentlicher Nachteil von Anzeigesystemen mit lichtemitierenden Dioden (LED's) ist der vergleichsweise hohe Aufwand, der insbesondere durch deren beschränkte Ablesewinkel entsteht. Oft beträgt der Ablesewinkel dieser Leuchtelemente nur 90 Grad. Für eine rundum sichtbare Reservierungsanzeige sind in diesem Fall insgesamt 4 Leuchtmatrizen erforderlich (4 x 90° = 360°). Für besonders kostengünstige Anzeigen mit nur 60 Grad Ablesewinkel sind sogar 6 Stück Anzeigen erforderlich um eine Rundum-Sichtbarkeit der Reservierungsanzeige zu ermöglichen (6 x 60° = 360°). Ein weiterer Nachteil der bisher bekannten Anzeigen ist, dass sie absolut starr sind und deshalb gegen Stöße von außen sehr empfindlich sind und auch nicht in die Polster von Sitzen oder Liegen eingebaut werden können, obwohl dieses eigentlich zur einer Eindeutigkeit der Kennzeichnung wünschenswert wäre.

Ein weiterer Nachteil bekannter Anzeigen ist die Empfindlichkeit gegen mechanische Stöße sowie die kurze Lebensdauer. Ein anderer Nachteil ist die relativ große Abmessung dieser Anzeigelemente die das Aufkleben auf den Abgrenzungselementen der Sitze oder auf dem Sitzgestell oder auf Befestigungselementen einschließen oder zumindest einschränken. Weitere Nachteile sind der hohe Stromverbrauch, der nicht nur die Betriebskosten erhöht, sondern auch für das komplexe Netzwerk der Verdrahtung höhere Leiterquerschnitte erfordert.

Neben dem begrenzten Abstrahlwinkel ist ein weiterer, wesentlicher Nachteil der Leuchtdioden für Sitzplatzreservierungen, dass bei Einfall von hellem Tageslicht, insbesondere Sonnenlicht, die Lesbarkeit der Anzeige sehr stark sinkt, da die reine Abstrahlung von Licht dann nicht mehr ausreicht, um das einfallende Tageslicht zu überstrahlen.

Eine bekannte Alternative ist die Anwendung von organischen Leuchtdioden, kurz OLED, aus organischen, halbleitenden Polymeren.

Ein ganz entscheidender Vorteil einer OLED als Leuchtelement ist, dass sie im Vergleich zu herkömmlichen Flüssigkristallanzeigen ohne Hintergrundbeleuchtung auskommt, wodurch deutlich weniger Energie benötigt wird und die Integration in kleine und mobile Geräte deutlich erleichtert wird und weiterhin die Laufzeit verlängert wird. Das Display ist so dünn wie eine Plastikfolie und in einer Ausführungsvariante auch so biegsam. In Verbindung mit einer Sitzplatzreservierung ist der ganz entscheidende Vorteil der OLED ihr extrem hoher Abstrahlwinkel. Es gibt Versionen, die einen Abstrahlwinkel von mehr als 170 Grad ermöglichen.

Eine OLED ist aus mehreren Schichten aufgebaut. Die unterste, als Anode verwendete Schicht (z. B. aus Indium-Zinn-Oxid, ITO) ist auf einer Glasscheibe aufgebracht. Darauf folgt eine Lochleitungsschicht (Hole Transport Layer = HTL).Zwischen ITO und HTL wird - abhängig von der Herstellungsmethode - oft noch eine Schicht aus Poly (3,4)-Ethylendioxitiophen (Polystyrolsulfonat) aufgebracht, die zur Absenkung der Injektionsbarriere für Löcher dient und außerdem die Oberfläche glättet.

Auf die HTL wird eine Schicht aufgebracht, die meist zu etwa 5 - 10 % aus dem Farbstoff besteht, aber in selteneren Fällen auch komplett aus einem Farbstoff wie zum Beispiel Aluminium - Tris (8-Hydroxihinolin = Alq3) besteht. Diese Schicht bezeichnet man als Emitterschicht (Emitter Layer = EL), auf welche dann eine Elektronenleitungsschicht (Electron Transport Layer = ETL) aufgebracht wird. Zum Abschluss wird eine Katode aus einem Metall oder aus einer Legierung mit geringer Elektronenaustrittsarbeit wie zum Beispiel Calcium, Aluminium oder einer Magnesium/Silber- Legierung im Hochvakuum aufgedampft.

Die Elektronen werden nun von der Katode injiziert, während die Anode die Löcher bereitstellt. Loch (=positive Ladung) und Elektron (=negative Ladung) driften aufeinander zu und treffen sich im Idealfall in der Emitterschicht, weshalb diese Schicht auch Rekombinationsschicht genannt wird. Die Elektronen und Löcher bilden einen gebundenen Zustand, den man als Exziton bezeichnet. Abhängig vom Mechanismus stellt das Exziton bereits den angeregten Zustand des Farbstoffmoleküls dar oder der Zerfall des Exzitons stellt die Energie zur Anregung des Farbstoffmoleküls bereit. Dieser Farbstoff hat verschiedene Anregungszustände. Der angeregte Zustand kann in den Grundzustand übergehen und dabei ein Photon (Lichtteilchen) aussenden. Die Farbe des ausgesendeten Lichtes hängt vom Energieabstand zwischen angeregtem und Grundzustand ab und kann durch Variation der Farbstoffmoleküle gezielt verändert werden.

In einer anderen Ausführungsvariante der OLED ändert sich zusätzlich auch der Reflektionsgrad in Abhängigkeit von der elektrischen Erregung, wodurch auftreffendes Licht unterschiedlich reflektiert wird.

Im Gegensatz zu spannungsgesteuerten LCD's (Liquid Crystal Displays) müssen die OLEDs stromgesteuert werden, es muss also ein Strom fließen, um Elektroluminiszens zu erzeugen, weshalb die bekannte und ausgereifte Technologie aus dem LCD- Bereich nicht einfach übertragen werden kann.

Ein entscheidender und spezifischer Vorteil kleinerer OLED-Displays ist die Ansteuerung über eine sogenannte Passivmatrix, das heißt ein bestimmtes Leuchtelement der Leuchtmatrix wird durch das Anlegen an den Leiter für eine Zeile der Leuchtmatrix und den zweiten Leiter für eine Spalte der Leuchtmatrix angesteuert.

Als wichtiger Vorteil gegenüber anderen Anzeigesystemen wird hiermit ein eigener Transistor zur Ansteuerung jedes Leuchtelementes vermieden. Deshalb ist es möglich, die OLEDs in einer sehr dünnen Baumform zu gestalten bis hin zu flexiblen Anzeigeelementen.

Ein entscheidender Vorteil der OLED bei einer Sitzplatz- Reservierungsanzeige ist ihr sehr großer Ableswinkel bis über 170°

Im Unterschied zu allen anderen Aufgaben für Anzeigen, ist es für ein Sitzplatz- Reservierungssystem von ganz vorrangiger Bedeutung, dass der Ablesewinkel so groß wie nur irgend möglich ist, idealerweise also 180° beträgt, was mit einer beschriebenen Schrifttafel ja auch erreichbar ist, jedoch den entscheidenden Nachteil der fehlenden elektronischen Ansteuerbarkeit hat. Diese 180°-Ablesbarkeit ist für eine frühzeitige Erkennung essentiell und ermöglicht damit der suchenden Person, bereits aus größerer Ferne zu erkennen, welche Sitze überhaupt reserviert sind sowie im zweiten Schritt, von anderen belegte Sitze zu identifizieren und damit überflüssige Suchschritte zu vermeiden, sondern direkt auf den einzigen, für die jeweilige Person reservierten Sitzplatz zuzugehen.

Als Ansteuerung weist eine elektronische Schnittstelle nach der Norm EIA-485 den Vorzug auf, dass sie mit einer kostengünstigen Zweiaderleitung auskommt und ohne Umstellung der Busdefinition auch über drahtlose Schnittstellen übertragen werden kann.

Ein weiterer, ganz entscheidender Vorteil ist, dass die Bausteine zur Ansteuerung, die sogenannten Treiber, gemäß dem aktuellen Stand der Technik bekannt und deshalb in sehr großer Vielfalt und zu wirtschaftlich äußerst interessanten Preisen verfügbar sind.

In der DE 297 16 850 wird die Ansteuerung einer Sitzplatzreservierungsanzeige mit OLED- oder LCD-Display über einen RS 485 Bus beschreiben.

Die Energieversorgung der einzelnen Anzeigen dieses Anzeigesystems wird nicht weiter erläutert, so dass gemäß dem aktuellen Stand der Technik von Kabeln zu jedem Display auszugehen ist.

Das Patent US 6.140.921, Baron beschreibt Sitzplatzreservierungen durch leuchtende Elemente an jedem Sitz. Nicht erläutert wird, wie der einzelne Sitz mit Energie und mit der Information für die Ansteuerung des Leucht-Elements versorgt wird.

Die Patent-Anmeldung US 2006/0076906 erläutert ein System zum Verbundbetrieb von zahlreichen Bildschirmen oder Beleuchtungseinrichtungen. Neben LCD's und LED's werden auch OLEDs als Anzeigeelement genannt.

Die Patentanmeldung US 2003/0090598 beschreibt OLEDSs auf Kleidungsstücken als Display für Texte und Graphiken und Methoden zu deren Ansteuerung. Die Personen, welche die Kleidungsstücke tragen, sollen entweder per Kabel mit einem PC verbunden werden, so dass auch die Energieversorgung in dieses Kabel integriert werden kann. Alternativ wird eine Ansteuerung der Displays über Funk vorgeschlagen, so dass keine feste Verbindung zu der Person mehr besteht und für die Energieversorgung von der Person eine Energiespeicher wie z.B. eine Batterie mitgeführt wird.

Ein weiterer, wichtiger Vorzug einer OLED anstelle von anderen bekannten Leuchtelementen wie einer LED oder einer LCD ist, dass die OLED in einer sogenannten Passivmatrix ansteuerbar ist, das heißt jedes Leuchtelement ist mit seinem einen Anschluss mit den entsprechenden Anschlüssen der anderen Leuchtelemente in der jeweiligen Zeile der Leuchtmatrix elektrisch leitend verbunden und mit seinem anderen Anschluss mit den jeweiligen anderen Anschlüssen der anderen Leuchtelemente in der jeweilige Spalte der Leuchtmatrix elektrisch leitend verbunden. Der Vorteil dieser Passivmatrix ist, dass jedes Leuchtelement durch Anlegen einer Spannung aktivierbar ist und ein ansonsten erforderlicher Transistor in der Leuchtmatrix entfällt. Damit sind erheblich dünnere und/oder sogar mechanisch flexible Anzeigen möglich.

Auf diesem Hintergrund hat sich die Erfindung die Aufgabe gestellt, eine langlebige und wirtschaftliche Reservierungsanzeige zu entwickeln, deren Abstrahlwinkel bis nahe an 180 Grad heranreicht, sodass für eine rundum sichtbare Reservierungsanzeige nur zwei Leuchtmatrizen eingesetzt werden müssen, die flexibel sind, sodass sie in Polsterungen integriert werden können.
Für die Ansteuerung ist eine Schnittstelle zu wählen, die besonders störunempfindlich ist, und über Kabellängen bis zu 1 km funktionssicher ist, dabei aber mit einer kostengünstigen Zweidrahtleitung auskommt.

Als Lösung lehrt die Erfindung, dass der Sitz oder die Liege ein Gestell und/oder eine Befestigung aufweisen, welche wenigstens ein Paar elektrisch leitende und voneinander elektrisch isolierte Elemente enthält, die den Anschluss für die elektrische Energieversorgung der Leuchtmatrix bilden und die Ansteuerung der Leuchtmatrix über die elektrische Energieversorgung oder durch Infrarot- oder durch Funk- oder durch Akustiksignale erfolgt und die Leuchtmatrix flexibel ist und in die Polsterung des Sitzes oder der Liege eingearbeitet ist und ein Bewegungsmelder integriert ist.

Durch die Kombination der OLED mit einer RS-485 Schnittstelle ist es möglich, dass sehr niedrige Spannungen zur Ansteuerung verwendbar sind, die keiner besondern Vorschrift für die Isolation unterliegen, sondern voll der menschlichen Berührung ausgesetzt sein können. Deshalb enthält das Gestell und/oder die Befestigung des Sitzes oder der Liege wenigstens ein Paar elektrisch leitende und voneinander elektrisch isolierte Elemente die den Anschluss für die elektrische Energieversorgung und für die Ansteuerung der Leuchtmatrix bilden. Da insbesondere in Verkehrsmitteln eine mechanisch stabile und belastbare Befestigung der Sitze erforderlich ist, ist es sinnvoll und ohne nennenswerten Mehraufwand machbar, diese Verbindung elektrisch leitend auszuführen. Dies wird durch die Definition der EIA-485-Schnittstelle ermöglicht, weil diese Schnittstelle spannungsorientiert ist und auf beiden Leitern Signale mit unterschiedlicher Polarität verlaufen, sodass sich Störungen, die auf beide Leiter gemeinsam wirken, gegenseitig wieder aufheben.

Alternativ zur Weitergabe der Ansteuerungsbefehle über die Energieversorgung im Gestell oder der Befestigung des Sitzes oder der Liege können die einzelnen Leuchtmatrizen an jedem einzelnen Sitz durch Infrarot- oder durch Funk- oder durch Akustik- Signale angesteuert werden. Bei dieser Konfiguration erfolgt nur die Energieversorgung über die Sitzgestelle.

Auch hier ist es ein Vorteil der Erfindung, dass für die Ansteuerung der EIA-485 vorgesehen ist, weil diese Definition einer sehr einfachen und daher kostengünstigen und belastbare Definition der Signalschnittstelle auch für eine Infrarot- oder Funk- oder Akustikansteuerung verwendbar ist. Hierdurch wird nicht nur das Anschlusskabel gespart, sondern vor allem der Aufwand für dessen Beschaffung, Verlegung und Wartung. Ferner wird die Sicherheit gegen Vandalismus erhöht.

Eine weiterer, sehr interessanter und schon erwähnter Vorteil ist die flexible Bauform der Leuchtmatrix, die auf diese Weise in die Polsterung des Sitzes eingenäht oder eingeklebt werden kann und dadurch in gewissen Grenzen der Belastung durch die darauf sitzende Person standhalten kann. Der Vorteil dieser Anordnung ist, dass kein Aufwand für eine weitere Halterung erforderlich ist, dass die Anzeige von der Rückseite her nicht zugänglich und daher gegen Vandalismus geschützt ist und dass sie gegen Beschädigungen von Außen durch Ausweichen in das Polster hinein ebenfalls in gewissen Grenzen abgesichert ist.

Ein weiterer Vorzug dieser Anordnung ist, dass die Zuordnung der Anzeige zu dem jeweiligen Sitz oder der jeweiligen Liege in dieser Konfiguration absolut eindeutig ist und Verwechslungen definitiv ausgeschlossen sind

Weiterhin ist ein Bewegungsmelder integriert, sodass die Reservierungsanzeige nur dann aufleuchtet, wenn auch tatsächlich eine Person in der Nähe ist, wodurch die Lebensdauer der Anzeige besonders erhöht wird.

Auch hier kommt wieder der Vorteil des OLED- Prinzips zum Tragen, nämlich die sehr kompakten Abmessungen und die Flexibilität des Anzeigeelementes, die auch das Aufbringen auf unebenen Flächen möglich machen.

Ein Vorteil von erfindungsgemäßen Sitzplatzreservierungsanzeigen, die an besonders hoch frequentierten und gradlinig verlaufenden Durchgangswegen montiert werden, ist der große Abstrahlwinkel. Mit einer erfindungsgemäßen Sitzplatzreservierungsanzeige ist es ausreichend, nur eine einzige Anzeige für jeden Sitzplatz einzusetzen, die parallel zum Durchgangsweg ausgerichtet ist und so von jedem Benutzer über einen großen Teil der gesamte Weglänge einsehbar ist. Diese Anordnung ist insbesondere bei Sitzen oder Liegen auf länglichen Grundrissen, wie in Eisenbahnwagen oder Flugzeugen, sinnvoll, da dort lange Gänge zwischen Sitzreihen hindurchgeführt sind, die in der Regel gerade verlaufen. Mit einem Abstrahlwinkel von wenigstens 170° oder in einer Sondervariante sogar über 170° kann deshalb die Sitzplatzanzeige fast von jedem Punkt des Ganges aus erkannt werden.

Ein weiterer Vorteil dieser Konfiguration einer erfindungsgemäßen Reservierungsanzeige ergibt sich daraus, dass in der Regel eine Reservierungsanzeige so angesteuert werden wird, dass sie bei einer Reservierung einen Schriftsatz aufleuchten lässt und bei nicht reservierten Sitzen oder Liegen dunkel bleibt. Diese erste und eminent wichtige Information, welche Sitze überhaupt reserviert sind, kann der Sitzplatzsuchende bereits aus großer Entfernung ausmachen, sodass er vorrangig einen Sitzplatz mit einer dunklen Anzeige, also ohne Reservierung, ansteuert.

Die Entfernung, aus der eine Sitzplatzreservierungsanzeige erkennbar ist, wird jetzt - im Gegensatz zu LED oder LCD - nicht mehr durch die Geometrie der Anzeige begrenzt, sondern ausschließlich durch die Geometrie der Sitzplätze und deren Anordnung.

Die Maximalgrenze der Sichtbarkeit ist nur noch durch das Auflösungsvermögen des menschlichen Auges begrenzt, sodass durch eine entsprechende Vergrößerung der Reservierungsanzeige auch aus sehr großer Entfernung ihre Erkennbarkeit für ein menschliches Auge sichergestellt werden kann.

Eine weitere, hoch interessante Ausführung einer erfindungsgemäßen Reservierungsanzeige ist, dass die aktivierten Leuchtelemente zusätzlich zur Emission von sichtbarem Licht auch einfallendes Licht reflektieren. Insbesondere für Reservierungsanzeigen hat nach bisherigem Stand der Technik bei sehr hellem Tageslicht, insbesondere bei direkt einfallendem Sonnenlicht, die Reservierungsanzeige das äußere Licht nicht mehr überstrahlen können, sodass sie selbst aus größter Nähe nicht mehr lesbar und dadurch funktionslos war. Abhilfemittel war nur eine drastische Erhöhung der Leuchtintensität, wodurch nicht nur die Kosten für die Anzeigeelemente selbst, sondern auch die Kosten für deren Energiebedarf deutlich nach oben gestiegen sind.

Bisherige, rein passiv reflektierende Anzeigen, wie LCD's, benötigten bei Dunkelheit stets eine Hintergrundbeleuchtung, die ebenfalls wieder einen hohen Energiebedarf hat. Hier bietet die OLED den Vorteil, dass sie in der Dunkelheit durch die Ausstrahlung von Licht eine einwandfreie Erkennbarkeit ermöglicht und bei hellem Tageslicht, das die abgestrahlte Lichtmenge überstrahlt, als reflektierendes Anzeigeelement wirkt, welches auf diese Weise eine einwandfreie Lesbarkeit ermöglicht.

Eine interessante Variante der erfindungsgemäßen Reservierungsanzeige mit OLEDs ist die Ausstrahlung von Botschaften in Textform oder Graphiken, so dass auch Speisekarten, Suchmeldungen, persönliche Nachrichten und Notfallmeldungenals Text oder z.B. Fluchtwege als Graphik wiedergegeben werden können.

Als weitere Variante ist es sinnvoll, der Reservierungsanzeige einen Sensor zur Erfassung der tatsächlichen Sitzplatzbelegung hinzuzufügen, womit ein zentrales Verwaltungssystem erkennen kann, ob ursprünglich reservierte Sitze doch noch frei sind, sodass zum Beispiel 15 Minuten nach Abfahrt des Zuges aus einem Bahnhof unbesetzte, jedoch ursprünglich reservierte Sitzplätze durch Anweisung einer Person aus der zentralen Erfassungsstelle schnell und unkompliziert belegt werden können.

Eine weitere, sinnvolle Kombination ist die Integration eines Rauchmelders. Damit wird die Meldung von Brandkatastrophen erheblich verbessert, weil jetzt nicht nur bekannt ist, dass ein Brand auftritt, sondern auch an welcher Stelle.

Im Unterschied zu anderen, bisher für Sitzplatzreservierungen bekannt gewordenen Leuchtelementen kann eine erfindungsgemäße Reservierungsanzeige mit erheblich geringeren Kosten mit erhöhter Brillanz und erhöhtem Ablesewinkel betrieben werden.

## Patentansprüche

1. Sitz- oder Liegeplatz mit Reservierungsanzeige, bestehend aus einem Sitz- und/oder einer Liege mit dazu nahegelegenen Abgrenzungselementen und einer Reservierungsanzeige mit einer Leuchtmatrix aus elektrisch ansteuerbaren Leuchtelementen als Anzeigefläche, die über eine elektronische Schnittstelle nach der Norm EIA-485, ehemals RS-485, ansteuerbar sind, und jedes Leuchtelement
- als "organische, lichtemittierende Diode", auch mit der Abkürzung "OLED" bezeichnet, aufgebaut ist und
- mit seinem ersten Anschluss mit den ersten Anschlüssen der anderen Leuchtelemente in der jeweiligen Zeile der Leuchtmatrix elektrisch leitend verbunden ist und
- mit seinem zweiten Anschluss mit den zweiten Anschlüssen der anderen Leuchtelemente in der jeweiligen Spalte der Leuchtmatrix elektrisch leitend verbunden ist und
- jedes Leuchtelement durch Anlegen einer Spannung an den Anschluss der jeweiligen Spalte und der jeweiligen Zeile der Leuchtmatrix aktivierbar ist,
**dadurch gekennzeichnet, dass**
- der Sitz oder die Liege ein Gestell und/oder eine Befestigung aufweist, welche wenigstens ein Paar elektrisch leitende und voneinander elektrisch isolierte Elemente enthält, die den Anschluss für die elektrische Energieversorgung der Leuchtmatrix bilden und
- die Ansteuerung der Leuchtmatrix über die elektrische Energieversorgung oder durch Infrarot- oder durch Funk- oder durch Akustiksignale erfolgt und
- die Leuchtmatrix flexibel ist und in die Polsterung des Sitzes oder der Liege eingearbeitet ist und
- ein Bewegungsmelder integriert ist.

2. Sitz- oder Liegeplatz mit Reservierungsanzeige nach einem der vorhergehenden Ansprüche, **dadurch gekennzeichnet, dass** die Leuchtmatrix parallel zu den Gängen zwischen den Sitzen oder den Liegen ausgerichtet ist.

3. Sitz- oder Liegeplatz mit Reservierungsanzeige nach einem der vorhergehenden Ansprüche, **dadurch gekennzeichnet, dass** die aktivierten Leuchtelemente zusätzlich zur Emission von sichtbarem Licht auch einfallendes Licht reflektieren.

4. Sitz- oder Liegeplatz mit Reservierungsanzeige nach einem der vorhergehenden Ansprüche, **dadurch gekennzeichnet, dass** die Leuchtmatrix zur Ausstrahlung von Botschaften in Textform eingerichtet ist.

5. Sitz- oder Liegeplatz mit Reservierungsanzeige nach einem der vorhergehenden Ansprüche, **dadurch gekennzeichnet, dass** ein Sensor zur Erfassung der tatsächlichen Sitzplatzbelegung integriert ist.

6. Sitz- oder Liegeplatz mit Reservierungsanzeige nach einem der vorhergehenden Ansprüche, **dadurch gekennzeichnet, dass** ein Rauchmelder integriert ist.

## Claims

1. Seat or berth having reserved display, comprising a seat and/or a berth having delimiting elements disposed close thereto, and a reserved display having a luminescent matrix comprising electrically actuatable luminescent elements as a display surface, which are actuatable via an electronic interface according to the standard EIA-485, formerly RS-485, and each luminescent element
- is constructed as an "organic light-emitting diode," also known by the abbreviation "OLED", and
- at its first connection, is electrically connected to the first connections of the other luminescent elements in the respective row of the luminescent matrix and
- at its second connection, is electrically connected to the second connections of the other luminescent elements in the respective column of the luminescent matrix and
- each luminescent element can be activated by applying a voltage to the connection of the respective column and the respective row of the luminescent matrix,
**characterised in that**
- the seat or the berth comprises a stand and/or a fastening that contains at least one pair of electrically conductive and mutually electrically insulated elements that form the connection for the electrical supply of the luminescent matrix, and
- actuation of the luminescent matrix takes place via the electrical energy supply or by infrared or by radio or by acoustic signals, and
- the luminescent matrix is flexible and is incorporated into the upholstery of the seat or berth and
- a motion sensor is integrated.

2. Seat or berth having a reserved display according to one of the preceding claims, **characterised in that** the luminescent matrix is oriented parallel to the aisles between the seats or the berths.

3. Seat or berth having a reserved display according to one of the preceding claims, **characterised in that** the activated luminescent elements, in addition to emitting visible light, also reflect incident light.

4. Seat or berth having a reserved display according to one of the preceding claims, **characterised in that** the luminescent matrix is set up for displaying messages in text form.

5. Seat or berth having a reserved display according to one of the preceding claims, **characterised in that** a sensor for registering the actual seat occupation is integrated.

6. Seat or berth having a reserved display according to one of the preceding claims, **characterised in that** a smoke alarm is integrated.

## Revendications

1. Siège ou couchette avec affichage de réservation, consistant en un siège et/ou une couchette avec des éléments de délimitation placés à proximité dans un affichage de réservation possédant une matrice lumineuse faite d'éléments lumineux pouvant être commandés électriquement en tant que surface d'affichage, qui peuvent être commandés via une interface électronique d'après la norme EIA-485, chaque élément lumineux
• étant construit en tant que « diode organique émettant de la lumière », également désignée par l'abréviation « OLED »,
• étant relié, en étant électriquement conducteur, au niveau de son premier raccord avec les premiers raccordements des autres éléments lumineux dans la ligne respective de la matrice lumineuse,
• étant relié, en étant électriquement conducteur, au niveau de ses seconds raccords avec les seconds raccordements des autres éléments lumineux dans la colonne respective de la matrice lumineuse,
• chaque élément lumineux pouvant être activé en créant une tension sur le raccordement de la colonne respective et de la ligne respective de la matrice lumineuse,
**caractérisé par le fait**
• **que** le siège ou la couchette présente un châssis et/ou une fixation qui contient au moins une paire d'éléments électriquement conducteurs et électriquement isolés les uns par rapport aux autres, qui forment le raccordement destiné à l'alimentation électrique de la matrice lumineuse,
• la commande de la matrice lumineuse étant effectuée par l'intermédiaire de l'alimentation électrique ou de signaux infrarouge ou radio ou acoustiques,
• la matrice lumineuse étant souple et le capitonnage du siège ou de la couchette étant intégré,
• un détecteur de mouvement étant intégré.

2. Siège ou couchette avec affichage de réservation selon une des revendications précédentes, **caractérisé par le fait que** la matrice lumineuse est orientée parallèlement aux couloirs entre les sièges ou les couchettes.

3. Siège ou couchette avec affichage de réservation selon une des revendications précédentes, **caractérisé par le fait que** les éléments lumineux activés réfléchissent la lumière incidente en sus de l'émission de lumière visible.

4. Siège ou couchette avec affichage de réservation selon une des revendications précédentes, **caractérisé par le fait que** la matrice lumineuse est réglée afin d'émettre des messages sous forme de texte.

5. Siège ou couchette avec affichage de réservation selon une des revendications précédentes, **caractérisé par le fait qu'**un capteur destiné à enregistré l'occupation effective des sièges est intégré.

6. Siège ou couchette avec affichage de réservation une ou plusieurs des revendications précédentes, **caractérisé par le fait qu'**un détecteur de fumée est intégré.
